(19) Europäisches Patentamt
European Patent Office
Office européen des brevets

(11) EP 0 774 017 B1

# (12) FASCICULE DE BREVET EUROPEEN

(45) Date de publication et mention de la délivrance du brevet:
**27.10.1999 Bulletin 1999/43**

(21) Numéro de dépôt: **95927759.1**

(22) Date de dépôt: **04.08.1995**

(51) Int Cl.⁶: **C23F 11/10**, C02F 5/12

(86) Numéro de dépôt international:
**PCT/FR95/01054**

(87) Numéro de publication internationale:
**WO 96/04411 (15.02.1996 Gazette 1996/08)**

(54) **COMPOSITION INHIBITRICE D'ENTARTRAGE ET DE CORROSION POUR PROTEGER LES SURFACES EN CONTACT AVEC DE L'EAU ET PROCEDE DE PREPARATION DE LADITE COMPOSITION**

ZUSAMMENSETZUNG ZUR VERHUETUNG VON KORROSION UND ABLAGERUNGEN IN WAESSRIGE SYSTEME UND VERFAHREN ZUR HERSTELLUNG DIESER ZUSAMMENSETZUNG

SCALE AND CORROSION INHIBITING COMPOSITION FOR PROTECTING SURFACES IN CONTACT WITH WATER AND METHOD FOR THE PREPARATION OF SAID COMPOSITION

(84) Etats contractants désignés:
**AT BE CH DE DK ES FR GB GR IE IT LI LU MC NL PT SE**

(30) Priorité: **04.08.1994 FR 9409702**

(43) Date de publication de la demande:
**21.05.1997 Bulletin 1997/21**

(73) Titulaire: **Concorde Chimie France**
**72230 Arnage (FR)**

(72) Inventeur: **MORAN, Francis**
**F-93230 Romainville (FR)**

(74) Mandataire: **Clisci, Serge et al**
**S.A. FEDIT-LORIOT & AUTRES**
**CONSEILS EN PROPRIETE INDUSTRIELLE**
**38, Avenue Hoche**
**75008 Paris (FR)**

(56) Documents cités:
**EP-A- 0 065 609**
**EP-A- 0 134 365**
**EP-A- 0 500 266**
**EP-A- 0 541 317**
**GB-A- 1 056 962**
**US-A- 2 882 171**
**US-A- 4 719 082**

Il est rappelé que: Dans un délai de neuf mois à compter de la date de publication de la mention de la délivrance du brevet européen, toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

EP 0 774 017 B1

## Description

### *Domaine de l'invention*

La présente invention a trait à une composition inhibitrice d'entartrage et de corrosion, en tant que produit industriel nouveau, pour protéger les surfaces d'installations en contact avec de l'eau, notamment celles des installations qui utilisent l'eau comme fluide énergétique ou thermique, en particulier contre les dépôts de tartres (tartres carbonatés, tartres sulfatés, tartres phosphatés, silice, etc...) et de produits de corrosion (oxydes métalliques), d'une part, et contre la corrosion par l'eau, d'autre part.
Elle concerne également un procédé de préparation de ladite composition.

### *Art antérieur*

Le problème de l'entartrage des circuits est un problème complexe dans la mesure où interviennent des types de tartres très différents : carbonates de calcium et de magnésium, phosphate de calcium, sulfate de calcium, oxydes de fer, silicates de calcium et de magnésium, silice, etc...
Ces dépôts proviennent :

- d'une part, d'une épuration incomplète des eaux utilisées, ou bien d'une défaillance du poste d'épuration de l'eau d'appoint du système (filtres, adoucisseurs, déminéralisateurs, etc...),
- d'autre part de l'action corrosive de l'eau liquide ou de la vapeur d'eau au contact des matériaux constitutifs des installations (aciers, aciers inoxydables, cuivre et alliages, etc...).

Les dépôts formés diminuent notablement les échanges thermiques et le rendement des installations, occasionnant des surcoûts importants des frais d'exploitation.
On sait que, dans le passé, les spécialistes se sont surtout concentrés sur les problèmes d'entartrage posés par le carbonate et le sulfate de calcium et ont découvert l'effet inhibiteur de produits comme les polyphosphates, les phosphates, les phosphonates, et enfin les polymères à faible masse molaire (500 à 5000), comme les polyacrylates, polyméthacrylates, polymaléates, etc...
Par exemple, on sait que la demande française FR-A-2 574 065 et le brevet européen correspondant, qui a été délivré, EP-B-0 184 558 proposent l'association de polyamines grasses avec lesdits polymères pour inhiber la précipitation des carbonates et sulfates de calcium. Plus précisément FR-A-2 574 065 (date de priorité : 4 décembre 1984 ; date de publication : 6 juin 1986), préconise une technique anti-tartre mettant en oeuvre une association comprenant au plus 50 % en poids d'un composant polyamine grasse de formule :

$$R_a\text{-[-NH-}(CH_2)_3\text{-]}_x\text{-}NH_2 \qquad \text{(Ia)}$$

où $R_a$ est un reste aliphatique en $C_{12}$-$C_{18}$ et x un nombre entier ayant pour valeur 1 à 6, et au moins 50 % en poids d'au moins un polymère choisi parmi les polymaléates, polyacrylates, polyméthacrylates, copolymères de maléate/acrylate, copolymères d'acrylate/méthacryiate, terpolymères d'acrylate/méthacrylate/itaconate et leurs mélanges.
Si l'on étend l'usage de ces produits à d'autre type de tartres ou dépôts, on constate qu'il n'existe pas de produits universels : un produit performant vis-à-vis du carbonate de calcium pourra être inopérant sur un autre type de tartre (notamment celui dû au dépôt d'oxydes de fer ou de silice).
On connaît par ailleurs, de EP-A-0 065 609 (date de publication : 1er décembre 1981), une composition inhibitrice de la corrosion par l'eau comprenant une association (i) d'un composant polyamine de formule IIa :

$$R_b\text{-[-NH-}(CH_2)_y\text{-]}_z\text{-}NH_2 \qquad \text{(IIa)}$$

où $R_b$ est un radical hydrocarboné en $C_{12}$-$C_{22}$ saturé ou insaturé, y est un nombre entier compris entre 2 et 8 inclus et z est un nombre entier compris entre 1 et 7 inclus, R, y et z étant tels que le poids moléculaire soit supérieur ou égal à 228, avec (ii) un composant électrolyte organique polymérique résultant de la polymérisation ou copolymérisation d'un monomère présentant un motif C = C, tel que notamment les composants polyacryliques, polyméthacryliques, polymaléiques, polyacrylamides et les copolymères correspondants.
Le document EP-A-0 065 609 précité envisage, parmi les électrolytes organiques polymériques, des composés polysulfonates du type copolymère acrylate/styrènesufonate de structure

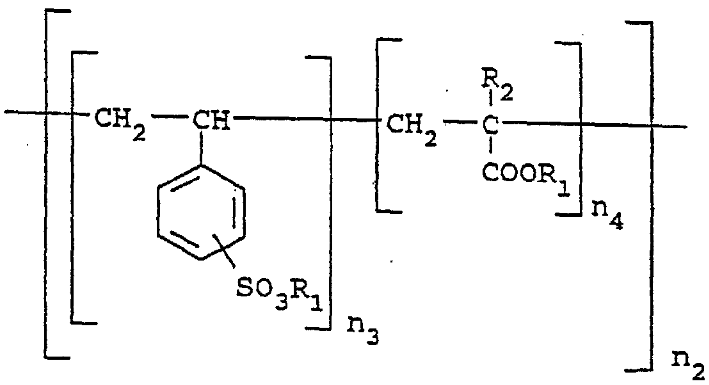

[voir formule XI et exemple 10 (tableau I, page 14) dudit document], d'une part, et du type "lignosulfonate" de structure :

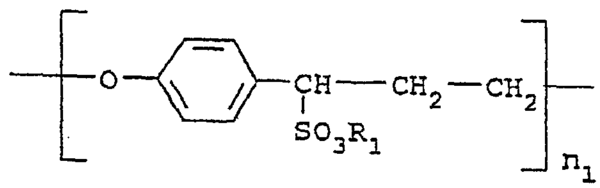

(voir formule XII dudit document), d'autre part.

Il se trouve par ailleurs que les compositions anti-corrosion selon EP-A-0 065 609 se sont révélées être des compositions anti-tartre, notamment quand le composant électrolyte organique polymérique est un composé du type acide polyacrylique, acide polyméthacrylique, polyacrylate alcalin ou polyméthacrylate alcalin. Ainsi à partir de 1983 (i.e. avant le dépôt de la demande FR-A-2 574 065 précitée), les produits "POLARIS® CR 40" "POLARIS® CR 40 II", qui renfermaient chacun une association polyamine grasse/polyacrylate selon EP-A-0 065 609, ont été commercialisés par la société U.C.I.O., le titulaire dudit document EP-A-0 065 609, en tant que compositions anti-tartre et simultanément compositions anti-corrosion.

On connaît également de US-A-4 719 082 l'utilisation d'un matériau polysulfonique en tant qu'agent de passivation pour prévenir l'entartrage et la corrosion des surfaces internes de chaudières opérant à des pressions supérieures à 1000 psi (6,89 x $10^6$ Pa). Il s'agit d'un copolymère acide méthacrylique/vinylsulfonate (dérivé d'acide vinylsulfonique hydrosoluble sous forme de sel) ayant un PM de 10000 à 75000 (de préférence un PM de 20000 à 50000), qui est supérieur à celui des composés de structure II ci-après selon l'invention (i.e. PM de 1500 à 5000), et comportant au moins 50 % en poids d'acide méthacrylique (de préférence au moins 80 % et mieux 95 % en poids d'acide méthacrylique, le complément à 100 % en poids représentant la teneur en vinylsulfonate).

Il se trouve que US-A-4 719 082 ne décrit ni ne suggère (i) l'utilisation anti-tartre et anti-corrosion des matériaux polysulfoniques de structure II selon l'invention qui ont un PM plus faible, et (ii) l'association d'un tel matériau polysulfonique avec une amine alcalinisante et une amine filmante.

### *But de l'invention*

Il se trouve que les solutions techniques proposées dans le passé notamment par le document EP-A-0 065 609 en ce qui concerne l'inhibition de la corrosion par l'eau et l'inhibition de l'entartrage, et le document FR-A-2 574 065 en ce qui concerne l'inhibition de l'entartrage, qui sont efficaces, se sont révélées insatisfaisantes en particulier dans le domaine de la protection des circuits d'installations qui utilisent de l'eau (fluide agressif) en tant que fluide énergétique ou thermique, notamment les circuits d'installations qui utilisent de la vapeur humide, de la vapeur sèche, de l'eau surchauffée ou surpressée, ou de l'eau chaude.

Il existait donc un besoin de mettre au point une nouvelle solution technique permettant d'améliorer la protection de surfaces métalliques en contact avec de l'eau, en tant que fluide agressif, vis-à-vis de la corrosion et de l'entartrage.

Selon l'invention, on se propose de fournir une nouvelle solution technique pour protéger les surfaces, notamment métalliques, en contact avec de l'eau vis-à-vis de la corrosion et de l'entartrage, cette nouvelle solution mettant en oeuvre un matériau sulfonique structurellement différent des composés polysulfonates sus-mentionnés décrits dans

le document EP-A-0 065 609 précité.

***Objet de l'invention***

Selon un premier aspect de l'invention, on se propose de fournir une nouvelle composition inhibitrice de corrosion et d'entartrage pour protéger les surfaces métalliques d'installations en contact avec de l'eau, ladite composition, qui contient un composant amine filmante (en abrégé AF ; en anglais : "film-forming amine"), un composant amine alcalinisante (en abrégé AA) et un composant organique polysulfonique (en abrégé PS) comportant dans sa molécule au moins 2 motifs de structure :

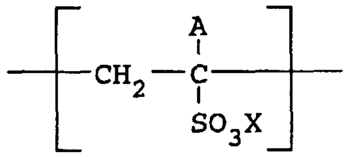
(Io)

dans laquelle A et X sont définis ci-après,
étant caractérisée en ce qu'elle comprend :

(a) 1 partie en poids de composant AF,
(b) 1 à 100 parties en poids de composant AA, et
(c) 1 à 100 parties en poids de composant PS,

ledit composant PS étant un matériau organique polymérique choisi parmi l'ensemble constitué par

(1) les polymères de structure

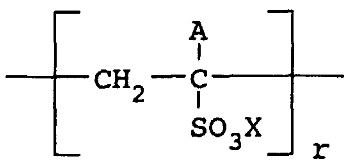
(I)

dans laquelle

- A représente l'atome d'hydrogène ou un groupe alkyle en $C_1$-$C_4$,
- X représente l'atome d'hydrogène, un cation $Na^+$, $K^+$ ou $NH_4^+$, ou un groupe alkyle en $C_1$-$C_4$, et
- r est un nombre ayant une valeur telle que le poids moléculaire moyen desdits polymères soit compris entre 1000 et 2000 ;

(2) les copolymères de structure

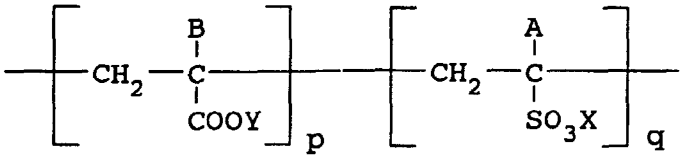
(II)

dans laquelle

- A et X sont définis comme indiqué ci-dessus,
- B représente l'atome d'hydrogène ou un groupe alkyle en $C_1$-$C_4$,

Y représente l'atome d'hydrogène, un cation $Na^+$, $K^+$ ou $NH_4^+$, ou un groupe alkyle en $C_1$-$C_4$, et

p et q sont des nombres tels que la somme p+q a une valeur donnant un poids moléculaire moyen pour lesdits copolymères compris entre 1500 et 5000 ; et,

(3) les terpolymères de structure

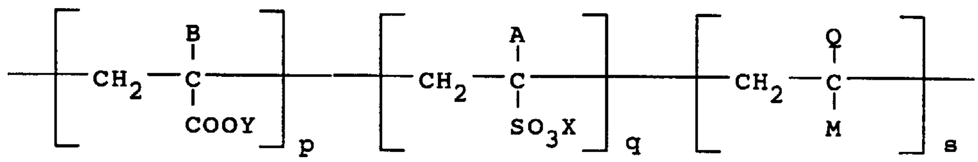

(III)

dans laquelle

A et X sont définis comme indiqué ci-dessus,

B et Y sont définis comme indiqué ci-dessus,

Q représente l'atome d'hydrogène ou un groupe alkyle en $C_1$-$C_4$,

M représente OH, CN, $CONH_2$ ou un groupe alkoxy en $C_1$-$C_4$, et

p, q et s sont des nombres tels que la somme p+q+s a une valeur donnant un poids moléculaire moyen pour lesdits terpolymères compris entre 1800 et 6000 ; et,

(4) leurs mélanges.

Avantageusement cette composition inhibitrice convient pour protéger les surfaces métalliques d'installations qui utilisent de l'eau comme fluide thermique ou énergétique.

La composition inhibitrice selon l'invention peut être préparée selon une méthode connue en soi qui consiste à mélanger les composants AF, AA et PS.

Le procédé de préparation que l'on préconise selon la présente invention pour l'obtention de ladite composition inhibitrice est caractérisé en ce qu'il comprend les étapes consistant à :

(1°) amener à l'état liquide le composant AF par chauffage (à une température suffisante),

(2°) introduire progressivement sous agitation le composant AF, ainsi fondu, dans une solution aqueuse du composant PS préalablement amenée à une température inférieure à celle dudit composant AF fondu, puis

(3°) introduire sous agitation, dans le mélange résultant ainsi obtenu, le composant AA.

***Brève description du dessin***

Dans le dessin annexé, la figure unique, référencée Fig. 1, représente schématiquement le circuit d'une installation pilote conçu pour apprécier et quantifier les propriétés anti-corrosion et anti-tartre de diverses compositions inhibitrices.

***Abréviations***

Dans ce qui suit, par commodité, on a utilisé les abréviations suivantes:

AA désigne une amine alcalinisante (également dénommée "amine neutralisante" même si elle conduit à un pH supérieur ou égal à 8), d'une part, ou un mélange d'amines alcalinisantes, d'autre part,

AF désigne une amine filmante, d'une part, ou un mélange d'amines filmantes, d'autre part ;

PA désigne un matériau polymère de type acrylique comprenant le motif récurrent de structure :

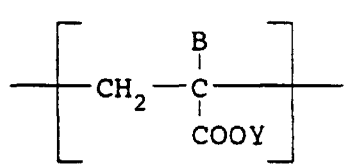

(IIo)

c'est-à-dire :

soit un polymère ou copolymère de l'acide acrylique (B=Y=H), de l'acide méthacrylique (B=$CH_3$ ; Y=H), d'un acide homologue (B=alkyle en $C_2$-$C_4$ ; Y=H), d'un sel (Y=$Na^+$, $K^+$ ou $NH_4^+$), d'un ester (Y=alkyle en $C_1$-$C_4$) ou un de leurs mélanges,

soit, dans les structures PA/PS et PA/PN/PS, un fragment d'un polymère ou copolymère d'un de ces acides, sels ou esters ;

PM désigne le poids moléculaire ;

PMM désigne le poids moléculaire moyen ;

PN désigne un matériau polymère dit "neutre" comprenant le motif récurrent de structure :

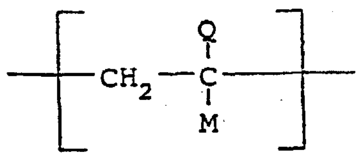

(IIIo)

où

Q représente l'atome d'hydrogène ou un groupe alkyle en $C_1$-$C_4$, et

M représente OH, CN, $CONH_2$ ou un groupe alkoxy en $C_1$-$C_4$ ;

ou un fragment d'un tel matériau dit "neutre" dans un produit copolymère tel que PA/PN/PS ;

PS désigne un matériau polymère du type sulfonique comprenant le motif récurrent de structure Io ci-dessus, ou l'un de ses fragments dans le cas des copolymères tels que PA/PS et PA/PN/PS ;

TH désigne le titre hydrotimétrique (exprimé ici en degrés français) ; et,

TAC désigne le titre alcalimétrique complet (exprimé ici en degrés français).

***Description détaillée de l'invention***

Dans ce qui suit par matériau polymère organique polyacide carboxylique (COOH) et sulfonique ($SO_3H$) on entend, par commodité, non seulement la forme acide mais encore la forme sel (COONa, COOK, $COONH_4$ et réciproquement $SO_3Na$, $SO_3K$, $SO_3NH_4$) et la forme ester (COO-alkyle en $C_1$-$C_4$ et réciproquement $SO_3$-alkyle en $C_1$-$C_4$).

La composition inhibitrice selon l'invention convient pour protéger vis-à-vis de la corrosion et de l'entartrage des surfaces en contact avec le milieu agressif que constitue l'eau. Elle est en particulier efficace pour protéger les surfaces métalliques d'installation qui utilisent l'eau comme fluide énergétique ou thermique, et plus précisément celles des installations qui utilisent de la vapeur humide, de la vapeur sèche, de l'eau surchauffée ou surpressée et de l'eau chaude. Par eau surchauffée on entend ici de l'eau liquide à une température supérieure à 100°C sous-pression. Par eau chaude on entend de l'eau liquide ayant une température inférieure à 100°C et en générale supérieure à 40°C.

La composition inhibitrice de l'invention est utile vis-à-vis de la corrosion et de l'entartrage, d'une part, et vis-à-vis des dépôts de silice et d'oxydes de fer, ce qui constitue un avantage considérable par rapport à l'enseignement de l'art antérieur, d'autre part.

D'un point de vue pratique, la composition inhibitrice est caractérisée en ce qu'elle comprend comme indiqué ci-dessus :

(a) 1 partie en poids de composant AF,

(b) 1 à 100 parties en poids de composant AA, et

(c) 1 à 100 parties en poids de composant PS,

ledit composant PS étant un matériau organique polymérique choisi parmi l'ensemble constitué par

(1) les polymères de structure

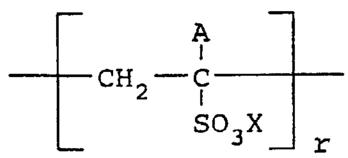 (I)

dans laquelle

A représente l'atome d'hydrogène ou un groupe alkyle en $C_1$-$C_4$,
X représente l'atome d'hydrogène, un cation $Na^+$, $K^+$ ou $NH_4^+$, ou un groupe alkyle en $C_1$-$C_4$, et
r est un nombre ayant une valeur telle que le poids moléculaire moyen desdits polymères soit compris entre 1000 et 2000 ;

(2) les copolymères de structure

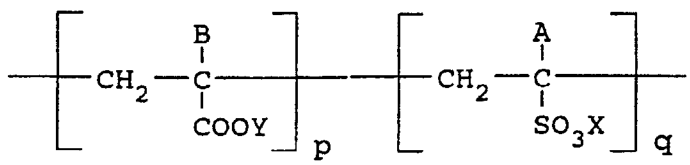 (II)

dans laquelle

A et X sont définis comme indiqué ci-dessus,
B représente l'atome d'hydrogène ou un groupe alkyle en $C_1$-$C_4$,
Y représente l'atome d'hydrogène, un cation $Na^+$, $K^+$ ou $NH_4^+$, ou un groupe alkyle en $C_1$-$C_4$, et
p et q sont des nombres tels que la somme p+q a une valeur donnant un poids moléculaire moyen pour lesdits copolymères compris entre 1500 et 5000 ; et,

(3) les terpolymères de structure

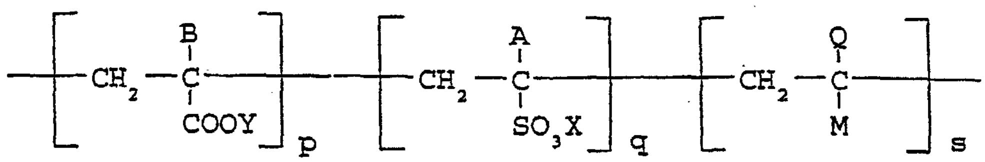 (III)

dans laquelle

A et X sont définis comme indiqué ci-dessus,
B et Y sont définis comme indiqué ci-dessus,
Q représente l'atome d'hydrogène ou un groupe alkyle en $C_1$-$C_4$,
M représente OH, CN, $CONH_2$ ou un groupe alkoxy en $C_1$-$C_4$, et
p, q et s sont des nombres tels que la somme p+q+s a une valeur donnant un poids moléculaire moyen pour lesdits terpolymères compris entre 1800 et 6000 ; et,

(4) leurs mélanges.

De façon avantageuse, dans les formules I, II et III du composant PS on préfère que (a) A=B=Q=H, et (b) X ou Y, identiques ou différents, représentent chacun H, $Na^+$, $K^+$ ou $NH_4^+$ ; c'est-à-dire que dans les formules II et III le fragment PA de structure IIo est un fragment purement polyacrylique (Y = H) ou polyacrylate (Y = $Na^+$, $K^+$ ou $NH_4^+$).
Les produits, qui sont inclus dans la définition du composant PS et qui conviennent selon l'invention, peuvent

être préparés par polymérisation ou copolymérisation selon une méthode comme en soi. De plus un certain nombre de ces produits sont des substances commerciales disponibles sous les dénominations NORAMER® et respectivement "COATEX TH" auprès des sociétés NORSOHAAS et respectivement COATEX. En particulier on peut utiliser en tant que composant PS, les produits NORAMER® 2000 (copolymère PA/PS), NORAMER® 3100 (copolymère PA/PN/PS) et "COATEX TH 215 50AS" (copolymère PA/PS).

Le composant amine filmante AF est choisi parmi l'ensemble constitué par les monoamines ou polyamines grasses et leurs mélanges. Ces monoamines et polyamines grasses sont notamment décrites dans les brevets FR-A-1 435 023, US-A-2 857 333, US-A-3 069 225, US-A-3 523 894, NL-B-100 963, la demande publiée EP-A-0 010 485 et les demandes précitées EP-A-0 065 609 et FR-A-2 574 065.

Selon l'invention, on préconise d'utiliser en tant que composant AF, une substance amine grasse choisie parmi l'ensemble constitué par

(i) les produits de formule

$$R-\left[NH-(CH_2)_m\right]_n-NH_2 \qquad (IV)$$

dans laquelle

R représente un radical hydrocarboné aliphatique saturé ou insaturé en $C_{12}$-$C_{22}$,
m représente un nombre entier ayant une valeur comprise entre 2 et 8 inclus, et
n représente un nombre entier ayant une valeur comprise entre 0 et 2 inclus ; et

(ii) leurs mélanges.

Les amines et polyamines filmantes selon la formule IV peuvent être utilisées telles qu'on peut les obtenir dans le commerce, seules ou mélangées entre elles, sous leurs formes pures, ou techniques. Parmi les polyamines commercialisées qui conviennent, on peut notamment citer les produits connus sous les noms de marque NORAM®, DUOMEEN®, DINORAM®, TRINORAM®, POLYRAM®, LILAMIN® et CEMULCAT® qui renferment au moins une polyamine (I). Parmi ces derniers produits, on peut mentionner le "DINORAM® O" qui renferme approximativement 75 % en poids sec d'oléylaminopropylèneamine, 9% en poids sec de stéary]aminopropylèneamine et 6 % en poids sec d'hexadécylaminopropylèneamine.

Le composant amine alcalinisante AA selon l'invention est une substance aminée qui est avantageusement choisie parmi l'ensemble constitué par (i) l'ammoniaque, la cyclohexylamine, la morpholine, les aminoalcools de formule :

$$HO\text{-}Z\text{-}NR'R'' \qquad (VI)$$

où Z est un groupe alkylène en $C_2$-$C_4$ à chaîne hydrocarbonée linéaire ou ramifiée, R' et R", qui peuvent être identiques ou différents, représentent chacun l'atome d'hydrogène ou un groupe alkyle en $C_1$-$C_3$, et (ii) leurs mélanges.

Quand on veut protéger vis-à-vis de la corrosion et de l'entartrage les surfaces métalliques d'une installation comprenant un générateur de vapeur ou d'eau surchauffée, une bâche alimentaire fournissant de l'eau alimentaire audit générateur, une portion de circuit où est utilisé le fluide provenant dudit générateur, et une portion de circuit où s'écoule le condensat, le composant AA a pour but de fournir au niveau du condensat un pH supérieur ou égal à 8, d'une part, et est stable jusqu'à une température d'au moins 250°C, d'autre part.

Le composant AF étant insoluble dans l'eau, on a intérêt à utiliser un agent dispersant tensioactif. De façon avantageuse, on préconise selon l'invention une composition inhibitrice renfermant outre les composants AF, AA et PS,

(d) 0,01 à 1 partie en poids de composant dispersant.

De façon pratique le composant dispersant sera avantageusement choisi parmi l'ensemble constitué par

(i) les amines oxyalkylénées qui répondent à la formule :

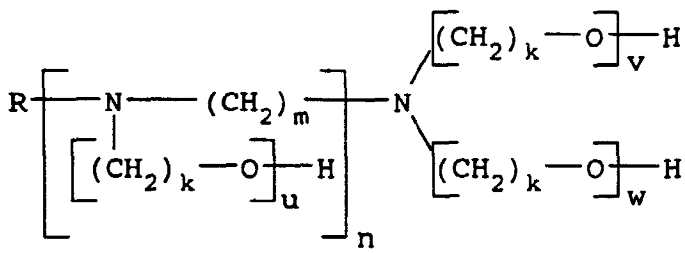

(V)

dans laquelle

R, m et n sont définis comme indiqué ci-dessus,
k est un nombre entier ayant pour valeur 2 ou 3,
u, v et w sont des nombres entiers tels que la somme v+w+(nu) soit comprise entre 2 et 22 ; et,

(ii) leurs mélanges.

Ainsi la composition inhibitrice de la corrosion et de l'entartrage selon l'invention comprendra avantageusement

(a) 1 partie en poids en poids sec de composant AF,
(b) 1 à 100 parties en poids sec de composant AA,
(c) 1 à 100 parties en poids sec du composant PS, et
(d) 0,01 à 1 partie en poids sec de composant dispersant amine oxyalkylénée.

Les composés de formule V peuvent être obtenus par condensation de 2 à 22 moles d'oxyde d'alkylène (oxyde d'éthylène ou oxyde de propylène) avec 1 mole d'amine IV.

Selon la nature des composants AF et PS qui sont utilisés, la composition selon l'invention, qui est obtenue par mélange des composants AF, AA, PS et, le cas échéant, le composant dispersant amine oxyalkylénée, peut se présenter sous la forme d'un gel, d'une pâte ou d'une cire.

Pour introduction aisée dans les circuits utilisant notamment de l'eau en tant que fluide énergétique ou thermique, on a intérêt à incorporer la composition (a) + (b) + (c) contenant le cas échéant le composant (d), pour protéger les surfaces (et plus avantageusement celles qui sont métalliques), préalablement diluée avec de l'eau de telle façon que la concentration de ladite composition dans la préparation aqueuse qui est injectée soit de l'ordre de 0,5 à 3 % p/v.

Le procédé de préparation d'une composition inhibitrice AF+AA+PS selon l'invention comprend avantageusement les étapes consistant à :

(1°) fondre le composant AF à une température comprise entre environ 30 et environ 85°C ;
(2°) introduire sous agitation le composant AF ainsi fondu dans une solution aqueuse du composant PS qui est à une température comprise entre environ 15 et environ 60°C, puis
(3°) introduire sous agitation dans le mélange résultant le composant AA et, quand il est présent, le composant dispersant amine oxyalkylénée.

En variante, l'étape (3°) peut être supprimée, si le composant AA et, quand il est présent, le composant dispersant sont associés à l'étape (2°) au composant PS.

On préconise par ailleurs d'utiliser la composition inhibitrice selon la présente invention suivant une méthode qui consiste, pour un circuit qui comprend un générateur de vapeur ou d'eau surchauffée, une bâche alimentaire fournissant de l'eau alimentaire audit générateur, une portion de circuit où est utilisé le fluide provenant dudit générateur et une portion de circuit où s'écoule le condensat, à introduire la composition aqueuse des composants AF, AA, PS et, le cas échéant, le composant dispersant amine oxyalkylénée de formule V, aux concentrations préférées de :

(a) 0,5 à 4 mg/l de composant AF,
(b) 1 à 20 mg/l de composant AA,
(c) 1 à 10 mg/l de composant PS, et
(d) le cas échéant 0,05 à 1 mg/l de composant dispersant amine oxyalkylénée,

en amont du générateur de vapeur ou d'eau surchauffée, c'est-à-dire : au niveau de l'eau d'appoint, au niveau de la bâche alimentaire ou encore au niveau de la conduite alimentant ledit générateur.

D'autres avantages et caractéristiques de l'invention seront mieux compris à la lecture de la description qui va suivre d'exemples de réalisation et d'essais comparatifs. Ces essais comparatifs mettent en évidence la synergie que présente la composition inhibitrice selon l'invention par rapport au composant PS utilisé seul en tant que moyen anti-corrosion ou anti-tartre, d'une part, et à l'association AA+ AF connue de EP-A-0 134 365, d'autre part.

Bien entendu l'ensemble de ces éléments n'est nullement limitatif mais est donné à titre d'illustration.

***Exemples***

On a consigné dans le tableau 1 ci-après un certain nombre d'exemples de composition inhibitrice de l'invention (référencés "Ex") et des produits de l'art antérieur (référencés "CP") selon les documents EP-A-0 065 609, EP-A-0 134 365, et FR-A-2 574 065 précités.

TABLEAU 1

| (1) | Composants | (2) |
|---|---|---|
| Ex 1 | oléylaminopropylèneamine | 2 |
| | cyclohexylamine | 10 |
| | copolymère acide acrylique/acide vinylsulfonique (a) | 4 |
| | agent dispersant de formule V (b) | 1 |
| Ex 2 | oléylaminopropylèneamine | 2 |
| | cyclohexylamine | 10 |
| | copolymère acide acrylique/acide vinylsulfonique/acrylamide (c) | 4 |
| | agent dispersant de formule V (b) | 1 |
| Ex 3 | stérylaminopropylèneamine | 2 |
| | cyclohexylamine | 10 |
| | copolymère acide acrylique/acide vinylsulfonique (a) | 4 |
| | agent dispersant de formule V (d) | 1 |
| Ex 4 | laurylaminopropylèneamine | 3 |
| | morpholine | 11 |
| | copolymère acide acrylique/vinylsulfonate de sodium (e) | 5 |
| | agent dispersant de formule V (f) | 1 |
| Ex 5 | eicosanylaminobutylèneamine | 3 |
| | cyclohexylamine | 10 |
| | copolymère acide acrylique/acide vinylsulfonique (a) | 5 |
| | agent dispersant de formule V (b) | 1 |
| Ex 6 | oléylaminopropylèneamine | 3 |
| | stéarylaminopropylèneamine | 1 |
| | cyclohexylamine | 12 |
| | copolymère acide acrylique/acide vinylsulfonique/acrylamide (c) | 5 |
| | agent dispersant de formule V (b) | 1 |

TABLEAU 1 (suite)

| (1) | Composants | (2) |
|---|---|---|
| Ex 7 | oléylaminopropylèneamine | 2 |
| | stéarylaminoproylèneamine | 1,5 |
| | linolénylaminopropylèneamine | 0,5 |
| | cyclohexylamine | 10 |
| | copolymère acide acrylique/acide vinylsulfonique/acrylamide (a) | 4 |
| | copolymère acide acrylique/vinylsulfonate de sodium (e) | 1 |
| | agent dispersant de formule V (d) | 1 |
| Ex 8 | oléylaminopropylèneamine | 4 |
| | cyclohexylamine | 11 |
| | copolymère acide acrylique/acide vinylsulfonique (a) | 5 |
| | agent dispersant de formule V (b) | 1 |
| Ex 9 | oléylaminopropylèneamine | 4 |
| | morpholine | 12 |
| | copolymère acide acrylique/vinylsulfonate de sodium (e) | 5 |
| | agent dispersant de formule V (b) | 0,5 |
| Ex 10 | stéarylaminopropylèneamine | 3 |
| | cyclohexylamine | 9 |
| | copolymère acide acrylique/acide vinylsulfonique (a) | 5 |
| | agent dispersant de formule V (b) | 0,5 |
| Ex 11 | oléylaminopropylèneamine | 1 |
| | cyclohexylamine | 3 |
| | copolymère acide acrylique/acide vinylsulfonique (a) | 5 |
| | agent dispersant de formule V (b) | 0,1 |
| Ex 12 | oléylaminopropylèneamine | 1 |
| | cyclohexylamine | 3 |
| | copolymère acide acrylique/acide vinylsulfonique/acrylamide (c) | 5 |
| | agent dispersant de formule V (b) | 0,1 |
| Ex 13 | oléylaminopropylèneamine | 1 |
| | cyclohexylamine | 6 |
| | éthanolamine | 3 |
| | copolymère acide acrylique/acide vinylsulfonique/acrylamide (a) | 5 |
| Ex 14 | stéarylaminopropylèneamine | 1 |
| | cyclohexylamine | 6 |
| | éthanolamine | 10 |
| | copolymère acide acrylique/acide vinylsulfonique/acrylamide (c) | 2 |

TABLEAU 1 (suite)

| (1) | Composants | (2) |
|---|---|---|
| Ex 15 | oléylaminopropylèneamine | 0,5 |
| | cyclohexylamine | 1,8 |
| | éthanolamine | 14,5 |
| | copolymère acide acrylique/acide vinylsulfonique/acrylamide (a) | 2 |
| | agent dispersant de formule V (b) | 0,5 |
| CP1 | oléylaminopropylèneamine | 4 |
| | cyclohexylamine | 10 |
| | agent dispersant de formule V (b) | 1 |
| CP2 | copolymère acide acrylique/acide vinylsulfonique (a) | 4 |
| CP3(g) | oléylaminopropylèneamine | 2 |
| | cyclohexylamine | 10 |
| | copolymère acide acrylique/acide styrènesulfonique | 4 |
| | agent dispersant de formule V (b) | 1 |
| CP4(g) | oléylaminopropylèneamine | 2 |
| | cyclohexylamine | 10 |
| | lignosulfonate de sodium | 4 |
| | agent dispersant de formule V (b) | 1 |
| CP5(h) | oléylaminopropylèneamine | 1 |
| | cyclohexylamine | 3 |
| | agent dispersant de formule V (b) | 0,1 |
| CP6 | copolymère acide acrylique/acide vinylsulfonique (a) | 5 |
| CP7(g) | oléylaminopropylèneamine | 1 |
| | cyclohexylamine | 3 |
| | copolymère acide acrylique/acide styrènesulfonique | 5 |
| | agent dispersant de formule V (b) | 0,1 |
| CP8(g) | oléylaminopropylèneamine | 1 |
| | cyclohexylamine | 3 |
| | lignosulfonate de sodium | 5 |
| | agent dispersant de formule V (b) | 0,1 |

***Notes :***

(1) : produits

(2) : quantités en partie(s) en poids sec

(a) copolymère de structure II (A = B = X = Y = H) de PMM 3500

(b) hexadécylaminopropylèneamine condensée avec 7 molécules d'oxyde d'éthylène

(c) copolymère de structure III (A = B = X = Y = Q = H ; M = $CONH_2$) de PPM 4500

(d) hexadécylaminopropylèneamine condensée avec 11 molécules d'oxyde d'éthylène

(e) copolymère de structure II (A = B = H ; X = Y = Na) de PMM 3700

(f) hexadécylaminopropylèneamine condensée

(g) selon l'enseignement de EP-A-0 065 609

(h) selon l'enseignement de EP-A-0 134 365.

La composition inhibitrice selon l'invention, telle que celles décrites dans le tableau 1, se présente sous la forme d'une suspension ou solution aqueuse renfermant les moyens AF, AA, PS et, le cas échéant, l'agent dispersant.

***Essais comparatifs sur pilote***

On a résumé ci-après les essais comparatifs et les résultats obtenus pour mettre en évidence la synergie de la composition selon l'invention, au moyen d'une installation pilote, représentée par la figure 1.

L'eau contenue dans le bac récepteur (ou bâche alimentaire) référencé B d'un aéroréfrigérant 1 transite par un ballon de deux litres 2 dans lequel elle est chauffée à la température de l'essai (régulation par thermomètre à contact et boîtier de régulation électronique). Ce premier système de chauffage référencé $R_1$ porte l'eau à 60°C pour les besoins de l'essai. Si nécessaire ledit bac récepteur reçoit de l'eau d'appoint selon 6. On trouve ensuite un système de recirculation de l'eau à l'aide d'une pompe 3 dont on peut faire varier le débit à l'aide de la vanne référencée V. Un premier tube porte-éprouvettes 4 permet la mise en place de plaquettes ou tubes témoins pour détermination de la corrosivité de l'eau à 60°C, par mesure des pertes de poids desdites éprouvettes ; un second système référencé $R_2$ permet le chauffage de l'eau à 90°C. A ce niveau, l'eau baigne la paroi extérieure d'un tube de chauffage en acier, qui permet de mesurer les incrustations sur paroi chaude et de les analyser par la suite. Un second tube porte-éprouvettes 5 permet des mesures de la corrosivité de l'eau à 90°C.

A la sortie dudit tube 5, l'eau du circuit est dirigée selon la conduite 7 vers le système de refroidissement de l'eau par échangeur air/eau 1 avant son recyclage.

Le volume total du circuit est de 15 litres.

Le circuit pilote comporte également des dispositifs de mesure du pH et des dispositifs de prélèvement (non représentés) pour analyse chimique de l'eau en circulation.

Dans les essais comparatifs, on a utilisé les mêmes produits, (à savoir composant AF : l'oléylaminopromylèneamine ; composant AA : cyclohexylamine ; composant PS : copolymère de structure II de PMM 3500, copolymère de structure III de PMM 4500, copolymère acide acrylique/acide styrènesulfonique selon l'enseignement de EP-A-0 065 609, ou lignosulfonate selon l'enseignement de EP-A-0 065 609 ; et un dispersant tensioactif suivant les mêmes quantités, selon des concentrations, en solution ou suspension dans de l'eau déminéralisée, de 2 ou 4 mg/l en AF, 10 mg/l en AA, 4 mg/l en PS et 1 mg/l en agent dispersant.

<u>Produit A1</u> (pour traitement classique) comprenant 4 parties en poids sec de AF, 10 parties en poids sec de AA et 1 partie en poids sec d'agent dispersant (voir CP1), en solution aqueuse dans de l'eau déminéralisée ;
<u>Produit A2</u> (comparatif) constitué par une solution aqueuse du composant PS de structure II (voir CP2) dans de l'eau déminéralisée ;
<u>Produit A3</u> (comparatif) constitué par CP3, c'est-à-dire comprenant A1 plus le copolymère acide acrylique/acide styrènesulfonique de EP-A-0 065 609 ;
<u>Produit A4</u> (comparatif) constitué par CP4, c'est-à-dire comprenant A1 plus le lignosulfonate de EP-A-0 065 609 ;
<u>Produit A5</u> (selon l'invention) comprenant selon Ex 1, 2 parties en poids sec de AF, 10 parties en poids sec de AA, 4 parties en poids sec de PS de structure II et 1 partie en poids sec d'agent dispersant, dans de l'eau déminéralisée ; et
<u>Produit A6</u> (selon l'invention) comprenant selon Ex 1, 2 parties en poids sec de AF, 10 parties en poids sec de AA, 4 parties en poids sec de PS de structure III et 1 partie en poids sec d'agent dispersant, dans de l'eau déminéralisée.

Les produits A1-A6 étaient introduits au niveau du bac B. L'eau présente dans le circuit de l'installation pilote possédait les caractéristiques suivantes :

- pH à 25°C 8,2
- TH total (en degré français) 25,0
- TAC (en degré français) 23,0
- chlorures ($Cl^-$ en mg/l) 100,0
- sulfates ($SO_4^{2-}$ en mg/l) 45,0
- silice (en mg/l) 28,0

Par élévation de la température cette eau devient entartrante. Elle est également corrosive comme le montre le tableau des résultats d'essais comparatifs (Tableau 2) ci-après.

Les produits inhibiteurs étaient préalablement dilués avec de l'eau déminéralisée (résistivité : 3 x $10^6$ Ω/cm/$cm^2$) avec d'être introduits par injection au niveau du bac B dans les 15 litres d'eau du circuit pilote.

Les essais ont été réalisés avec des éprouvettes en acier (de type XC 35) et des éprouvettes en cuivre.

Les mesures de pertes de poids des éprouvettes ΔP ont été traduites en vitesse de corrosion V selon la relation

$$V = \frac{10.\Delta P.365}{J.S.d}$$

dans laquelle

V = vitesse de corrosion exprimée en µm/an;
ΔP = perte de poids exprimée en milligramme ;
J = nombre de jours d'exposition au milieu agressif;
S = surface externe de l'éprouvette exprimée en $cm^2$ ;
d = masse spécifique du métal de l'éprouvette exprimée en $g/cm^3$.

Les taux d'encrassement sont exprimés en $g/m^2$/jour.

La durée de l'essai (J) est de 31 jours.

TABLEAU 2

| Produit | taux d'encrassement à 90°C | vitesse de corrosion à 60°C | | vitesse de corrosion à 90°C | |
|---|---|---|---|---|---|
| | | acier | cuivre | acier | cuivre |
| - (a) | 25 | 180 | 35 | 250 | 50 |
| A1 | 19 | 90 | 20 | 120 | 25 |
| A2 | 3,5 | 190 | 22 | 260 | 33 |
| A3 | 2,5 | 50 | 11 | 90 | 22 |
| A4 | 3,1 | 85 | 17 | 110 | 21 |
| A5 | 0,8 | 25 | 3 | 33 | 5 |
| A6 | 0,7 | 28 | 8 | 36 | 12 |

(a) essai à blanc sans inhibiteur

Le tableau 3 suivant montre l'efficacité inhibitrice (pourcentage d'inhibition) qui est définie par la relation :

$$E(\%)= \frac{Vo-V}{Vo} \text{ x100 ou bien } E\% = \frac{Po-P}{Po} \text{x100}$$

où V et Vo représentent les vitesses de corrosion exprimées en µm/an avec et respectivement sans inhibiteur, et P et Po le taux d'encrassement de la résistance $R_2$ avec et respectivement sans inhibiteur.

TABLEAU 3

| Produit | % d'inhibition de l'encrassement à 90°C | % d'inhibition de la corrosion à 60°C | | % d'inhibition de la corrosion à 90°C | |
|---|---|---|---|---|---|
| | | acier | cuivre | acier | cuivre |
| - (a) | 0 | 0 | 0 | 0 | 0 |
| A1 | 24,0 | 50 | 42,9 | 52 | 50 |
| A2 | 86,0 | -5,6 | 37,1 | 4 | 34 |
| A3 | 62,1 | 53 | 50,3 | 54 | 54 |
| A4 | 75,2 | 52 | 47,2 | 53 | 52 |
| A5 | 96,8 | 86,1 | 91,4 | 86,8 | 90 |
| A6 | 97,2 | 84,4 | 77,1 | 85,6 | 76 |

(a) essai à blanc sans inhibiteur

Les résultats obtenus mettent en évidence l'intérêt de l'invention par rapport aux techniques antérieures connues : les compositions A5 et A6 selon l'invention donnent, d'une part, des taux d'encrassement nettement plus

faibles que ceux obtenus avec A1, A2, A3 et A4 et, d'autre part, des vitesses de corrosion notamment très inférieures à celles de A1, A2, A3 et A4 vis-à-vis de l'acier et du cuivre. Un pourcentage d'inhibition de corrosion négatif (cas de A2 vis-à-vis de l'acier) indique une potentialisation de la corrosion.

L'analyse des dépôts, effectué au moyen de rayons X sous microscope électronique à balayage (M.E.B.) permet de déterminer leurs teneurs en éléments simples : carbone (C), oxygène (O), calcium (Ca), silicium (Si), fer (Fe), cuivre (Cu), etc... et de donner la composition la plus probable de chaque dépôt analysé en carbonate de calcium ($CaCO_3$), oxyde de fer ($Fe_2O_3$), oxyde de cuivre (CuO), silice ($SiO_2$), etc...

Le tableau 4 ci-après montre les teneurs relatives exprimées en mg, déterminées à partir des dépôts, pour chaque essai.

TABLEAU 4

| Ingrédients | -(a) | A1 | A2 | A3 | A4 | A5 | A6 |
|---|---|---|---|---|---|---|---|
| Carbonate de calcium | 2558 | 2400 | 195 | 180 | 182 | 118 | 100 |
| Oxyde de fer | 1023 | 406 | 221 | 202 | 215 | 15 | 16 |
| Oxyde de cuivre | 93 | 88 | 130 | 90 | 95 | 3 | 3 |
| Silice | 837 | 535 | 80 | 75 | 78 | 5 | 3 |
| Matière organique | 23 | 35 | 6 | 7 | 6 | 3 | 4 |
| Non déterminé | 116 | 70 | 18 | 15 | 15 | 5 | 4 |
| Total dépôt en mg | 4650 | 3534 | 650 | 576 | 591 | 149 | 130 |

(a) essai à blanc sans inhibiteur

L'examen de la composition des dépôts montre l'intérêt des produits A5 et A6 selon l'invention par rapport à A1, A2, A3 et A4, pour inhiber la formation du dépôt de carbonate de calcium, mais aussi et surtout pour inhiber la formation des dépôts d'oxydes (ce qui est confirmé par une autre série d'essais ci-après) et inhiber les dépôts de silice. Ce dernier point est très important quand on sait que les dépôts de silice sont très peu conducteur de la chaleur et qu'ils contribuent rapidement à une baisse de rendement significative des surfaces d'échange.

***Essais de dispersion de l'oxyde de fer***

Les eaux chargées en fer dissous présentent un problème important dans le traitement des eaux de chaudières ou de refroidissement. Le fer total dissous, dans les conditions d'exploitation des installations précitées, précipite sous forme d'oxydes (principalement l'oxyde $Fe_2O_3$) ou d'hydroxydes sur les surfaces d'échange thermique, engendrant des phénomènes d'encrassement et de baisse de rendement. Des phénomènes de corrosions sous les dépôts peuvent également se développer, mettant en jeu la durée de vie des installations.

Pour montrer l'efficacité dispersante et la synergie des compositions selon l'invention vis-à-vis des eaux chargées en fer, des essais ont été réalisés selon le protocole décrit ci-après.

**(a) Produits**

On a utilisé les mêmes composants AF, AA et PS indiqués ci-dessus dans les essais comparatifs sur pilote, avec les concentrations suivantes :

1 mg/l de composant AF,
3 mg/l de composant AA,
5 mg/l de composant PS, et
0,1 mg/l d'agent dispersant.

Les compositions utilisées étaient les suivantes :

Produit B1 (pour traitement classique) comprenant 1 parties en poids sec de AF, 3 parties en poids sec de AA et 0,1 partie en poids sec d'agent dispersant (voir CP5), dans de l'eau déminéralisée ;
Produit B2 (comparatif) constitué par une solution aqueuse du composant PS de structure II (voir CP6) dans de l'eau déminéralisée ;
Produit B3 (comparative constitué par CP7, c'est-à-dire comprenant B1 plus le copolymère acide acrylique/acide

styrènesulfonique de EP-A-0 065 609 ;

Produit B4 (comparatif) constitué par CP8, c'est-à-dire comprenant B1 plus le lignosulfonate de EP-A-0 065 609 ;

Produit B5 (selon l'invention) comprenant selon Ex 11, 1 partie en poids sec de AF, 3 parties en poids sec de AA, 5 parties en poids sec de PS de structure II et 0,1 partie en poids sec d'agent dispersant, dans de l'eau déminéralisée ; et

Produit B6 (selon l'invention) comprenant selon Ex 12, 1 partie en poids sec de AF, 3 parties en poids sec de AA, 5 parties en poids sec de PS de structure III et 0,1 partie en poids sec d'agent dispersant, dans de l'eau déminéralisée.

**(b) Méthodologie**

Placer dans un bêcher 430 il d'une solution dans l'eau déminéralisée, contenant 200 mg/l de $CaCl_2$ et 0,3 g/l de $Fe_2O_3$. Mélanger pendant 15 minutes. Ajuster à pH 7,5 par ajout de soude (NaOH).

Placer 100 ml de la solution obtenue dans 7 récipients.

Ajouter les produits Bl à B6 selon les dosages précités dans 6 desdits récipients, le septième récipient servant de témoin. Ramener toutes les solutions à pH 9 par ajout de soude si nécessaire.

Fermer les récipients et les placer dans un mélangeur pendant 15 minutes à faible vitesse ("Jar test").

Laisser reposer ensuite pendant 4 heures.

Prélever 20 il dans une ampoule et mesurer la turbidité qui doit être comprise entre 0 et 1000 FTU ("Formazine Turbidity Unit"). Cette mesure est effectuée avec un spectrophotomètre étalonné, type HACH.

Une turbidité élevée après 4 heures indique une bonne dispersion du fer et donc une bonne efficacité du produit testé.

**(c) Résultats**

Les résultats obtenus sont consignés dans le tableau 5 ci-après :

TABLEAU 5

| Produits | Turbidité |
|---|---|
| - (a) | 110 |
| B1 | 240 |
| B2 | 320 |
| B3 | 340 |
| B4 | 330 |
| B5 | 460 |
| B6 | 985 |

(a) essai à blanc sans inhibiteur

Ces essais montrent les excellents résultats obtenus avec les produits B5 et B6 et l'intérêt de l'invention par rapport aux techniques antérieures (comme B1, B2, B3 et B4), en ce qui concerne la dispersion des oxydes de fer, d'une part, et pour empêcher la déposition desdits oxydes sur les surfaces, d'autre part.

**Revendications**

1. Composition inhibitrice de corrosion et d'entartrage pour protéger les surfaces métalliques d'installations en contact avec de l'eau, ladite composition, qui contient un composant amine filmante (AF), un composant amine alcalinisante (AA) et un composant organique polysulfonique (PS) comportant dans sa molécule au moins 2 motifs de structure :

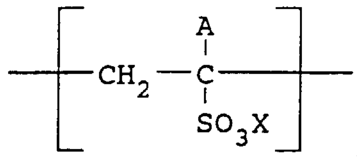 (Io)

dans laquelle A et X sont définis ci-après, étant caractérisée en ce qu'elle comprend :

(a) 1 partie en poids de composant AF,
(b) 1 à 100 parties en poids de composant AA, et
(c) 1 à 100 parties en poids de composant PS,

ledit composant PS étant un matériau organique polymérique choisi parmi l'ensemble constitué par

(1) les polymères de structure

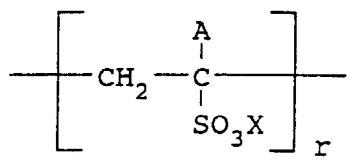 (I)

dans laquelle

A représente l'atome d'hydrogène ou un groupe alkyle en $C_1$-$C_4$,
X représente l'atome d'hydrogène, un cation $Na^+$, $K^+$ ou $NH_4^+$, ou un groupe alkyle en $C_1$-$C_4$, et
r est un nombre ayant une valeur telle que le poids moléculaire moyen desdits polymères soit compris entre 1000 et 2000 ;

(2) les copolymères de structure

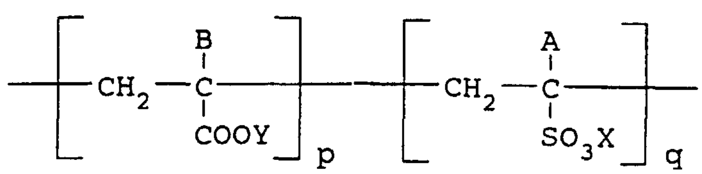 (II)

dans laquelle

A et X sont définis comme indiqué ci-dessus,
B représente l'atome d'hydrogène ou un groupe alkyle en $C_1$-$C_4$,
Y représente l'atome d'hydrogène, un cation $Na^+$, $K^+$ ou $NH_4^+$, ou un groupe alkyle en $C_1$-$C_4$, et
p et q sont des nombres tels que la somme p+q a une valeur donnant un poids moléculaire moyen pour lesdits copolymères compris entre 1500 et 5000 ; et,

(3) les terpolymères de structure

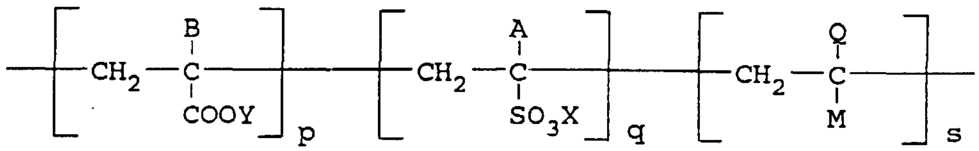 (III)

dans laquelle

| | |
|---|---|
| A et X | sont définis comme indiqué ci-dessus, |
| B et Y | sont définis comme indiqué ci-dessus, |
| Q | représente l'atome d'hydrogène ou un groupe alkyle en $C_1$-$C_4$, |
| M | représente OH, CN, $CONH_2$ ou un groupe alkoxy en $C_1$-$C_4$, et |
| p, q et s | sont des nombres tels que la somme p+q+s a une valeur donnant un poids moléculaire moyen pour lesdits terpolymères compris entre 1800 et 6000 ; et, |

(4) leurs mélanges.

**2.** Composition inhibitrice suivant la revendication 1, caractérisée en ce que A est H, et X est H, $Na^+$, $K^+$ ou $NH_4^+$.

**3.** Composition inhibitrice suivant la revendication 1, caractérisée en ce que B et Q représente chacun H, et Y est H, $Na^+$, $K^+$ ou $NH_4^+$.

**4.** Composition inhibitrice suivant la revendication 1, caractérisée en ce que le composant amine filmante est une amine grasse choisie parmi l'ensemble constitué par

(i) les monoamines et polyamines de formule

$$R-\left[NH-(CH_2)_m\right]_n-NH_2 \qquad (IV)$$

dans laquelle

| | |
|---|---|
| R | représente un radical hydrocarboné aliphatique saturé ou insaturé en $C_{12}$-$C_{22}$, |
| m | représente un nombre entier ayant une valeur comprise entre 2 et 8 inclus, |
| n | représente un nombre entier ayant une valeur comprise entre 0 et 2 inclus ; et, |

(ii) leurs mélanges.

**5.** Composition inhibitrice suivant la revendication 1, caractérisée en ce que le composant amine alcalinisante est une substance aminée stable jusqu'à une température d'au moins 250°C et qui est choisie parmi l'ensemble constitué par (i) l'ammoniaque, la cyclohexylamine, la morpholine, les aminoalcools de formule :

$$HO\text{-}Z\text{-}NR'R'' \qquad (VI)$$

où Z est un groupe alkylène en $C_2$-$C_4$ à chaîne hydrocarbonée linéaire ou ramifiée, R' et R", qui peuvent être identiques ou différents, représentent chacun l'atome d'hydrogène ou un groupe alkyle en $C_1$-$C_3$, et (ii) leurs mélanges.

**6.** Composition inhibitrice suivant la revendication 1, caractérisée en ce qu'elle comprend en outre

(d) 0,01 à 1 partie en poids de composant dispersant.

**7.** Composition inhibitrice suivant la revendication 6, caractérisée en ce que ledit composant dispersant est choisi

parmi l'ensemble constitué par

(i) les amines oxyalkylénées qui répondent à la formule :

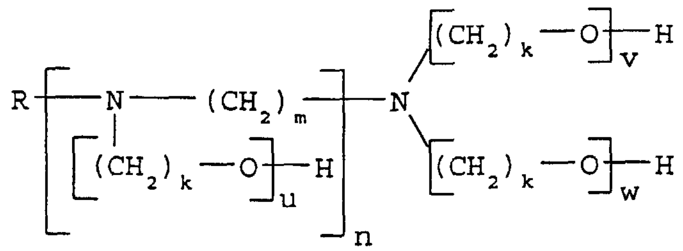

(V)

dans laquelle

| | |
|---|---|
| R, m et n | sont définis comme indiqué ci-dessus, |
| k | est un nombre entier ayant pour valeur 2 ou 3, |
| u, v et w | sont des nombres entiers tels que la somme v + w + (nu) soit comprise entre 2 et 22 ; et, |

(ii) leurs mélanges.

**8.** Procédé de préparation d'une composition inhibitrice pour protéger les surfaces d'installations en contact avec de l'eau vis-à-vis de la corrosion et de l'entartrage, selon l'une quelconque des revendications 1, 6 et 7, ledit procédé étant caractérisé en ce qu'il comprend les étapes consistant à :

(1°) amener à l'état liquide le composant AF par chauffage,
(2°) introduire progressivement sous agitation le composant AF, ainsi fondu, dans une solution aqueuse du composant PS préalablement amenée à une température inférieure à celle dudit composant AF fondu, puis
(3°) introduire sous agitation, dans le mélange résultant ainsi obtenu, le composant AA.

**9.** Procédé suivant la revendication 8, caractérisé en ce qu'il comprend les étapes consistant à :

(1°) fondre le composant AF à une température comprise entre environ 30 et environ 85°C ;
(2°) introduire sous agitation le composant AF, ainsi fondu, dans une solution aqueuse du composant PS qui est à une température comprise entre environ 15 et environ 60°C, puis
(3°) introduire sous agitation dans le mélange résultant le composant AA et, quand il est présent, le composant dispersant amine oxyalkylénée.

**10.** Procédé suivant l'une quelconque des revendications 8 et 9, dans lequel l'étape (3°) est supprimée, quand le composant AA, d'une part, et le composant dispersant si celui-ci est présent, d'autre part, sont chacun associés à l'étape (2°) au composant PS.

**Patentansprüche**

**1.** Zusammensetzung zur Verhütung von Korrosion und Ablagerungen zum Schutz von metallischen Oberflächen die in Kontakt mit Wasser installiert werden, dadurch gekennzeichnet, daß die Zusammensetzungen Aminfilamente (AF), eine alkalinisierte Aminzusammensetzung (AA) und eine organische Polysulfonzusammensetzung (PS), die in ihrem Molekül mindestens zwei Einheiten der Struktur aufweist, enthalten:

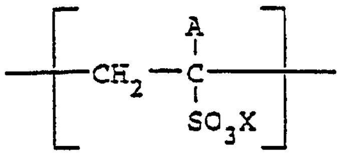 (Io)

worin A und X die vorstehend angegebene Bedeutung besitzen, dadurch charakterisiert, daß sie enthält:

(a) 1 Gewichtsteil der Verbindung AF,
(b) 1 bis 100 Gewichtsteile der Verbindung AA, und
(c) 1 bis 100 Gewichtsteile der Verbindung PS, wobei PS ein organisches polymeres Material ist, das ausgewählt ist aus der Gruppe bestehend aus

(1) den Polymeren der Struktur

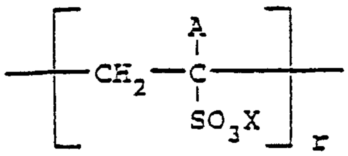 (I)

worin bedeuten

A ein Wasserstoffatom oder eine $C_1$-$C_4$-Alkylgruppe,
X ein Wasserstoffatom oder ein $Na^+$, $K^+$ oder $NH_4^+$-Kation, oder eine $C_1$-$C_4$-Alkylgruppe, und
r eine Zahl ist, die einen Wert besitzt, der ein mittleres Molekulargewicht des Polymers zwischen 1000 und 2000 ergibt;

(2) den Copolymeren der Struktur

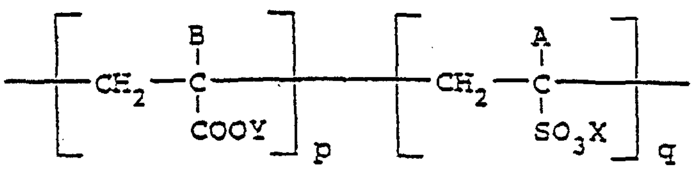 (II)

worin

A und X die vorstehend angegebene Bedeutung besitzen,
Bein Wasserstoffatom oder eine $C_1$-$C_4$-Alkylgruppe bedeutet,
Y ein Wasserstoffatom, ein $Na^+$, $K^+$ oder $NH_4^+$-Kation oder eine $C_1$-$C_4$-Alkylgruppe bedeutet, und
p und q Zahlen sind, deren Summe p+q einen Wert für ein mittleres Molekulargewicht der Copolymeren zwischen 1500 und 5000 ergibt; und

(3) den Terpolymeren der Struktur

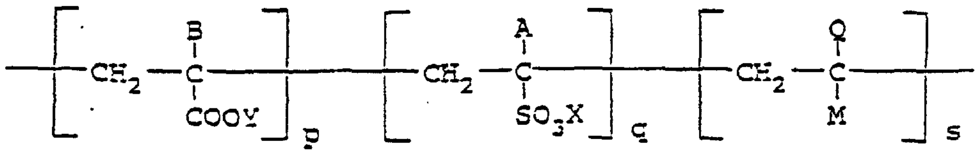 (III)

worin

A und X die vorstehend angegebene Bedeutung besitzen,
B und Y die vorstehend angegebene Bedeutung besitzen,
Q ein Wasserstoffatom oder eine $C_1$-$C_4$-Alkylgruppe bedeutet,
M OH, CN, $CONH_2$ oder eine $C_1$-$C_4$-Alkoxygruppe bedeutet, und
p, q und s Zahlen sind, deren Summe p+q+s den Wert für ein mittleres Molekulargewicht für das Terpolymere zwischen 1800 und 6000 ergibt; und

(4) ihre Mischungen.

2. Verhütungszusammensetzung nach Anspruch 1, dadurch gekennzeichnet, daß A H ist, X H, $Na^+$, $K^+$ oder $NH_4^+$ ist.

3. Verhütungszusammensetzung nach Anspruch 1, dadurch gekennzeichnet, daß B und Q jeweils H bedeuten, und Y H, $Na^+$, $K^+$ oder $NH_4^+$ ist.

4. Verhütungszusammensetzung nach Anspruch 1, dadurch gekennzeichnet, daß die Aminfilamentzusammensetzung ein Fettamin ist, ausgewählt aus der Gruppe bestehend aus:

(i) den Monoaminen und Polyaminen der Formel

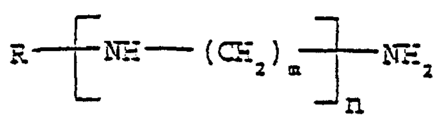 (IV)

worin

R ein aliphatisches gesättigtes und ungesättigtes $C_{12}$-$C_{22}$-Kohlenwasserstoffradikal bedeutet,
m eine ganze Zahl bedeutet, deren Wert zwischen 2 und 8 liegt,
n eine ganze Zahl bedeutet, deren Wert zwischen 0 und 2 liegt, und

(ii) ihre Mischungen.

5. Verhütungszusammensetzung nach Anspruch 1, dadurch gekennzeichnet, daß die alkalisierende Aminzusammensetzung eine aminierte Substanz ist, die bei einer Temperatur von mindestens 250 °C stabil ist, und die ausgewählt ist unter der Gruppe bestehend aus (i) Ammoniak, Cyclohexylamin, Morpholin, den Aminoalkoholen der Formel:

$$HO\text{-}Z\text{-}NR'R'' \qquad (Vi)$$

worin Z eine $C_2$-$C_4$-geradkettige oder verzweigte Alkylgruppe ist, R' und R", die gleich oder verschieden sein können, jeweils eine Wasserstoffatom oder eine $C_1$-$C_3$-Alkylgruppe bedeuten, und (ii) ihren Mischungen.

6. Verhütungszusammensetzung nach Anspruch 1, dadurch gekennzeichnet, daß sie außerdem umfaßt (d) 0,01 bis 1 Gewichtsteil eines Dispersionsmittels.

7. Verhütungszusammensetzung nach Anspruch 6, dadurch gekennzeichnet, daß das Dispersionsmittel ausgewählt ist aus der Gruppe bestehend aus

(i) den oxyalkylierten Aminen der Formel:

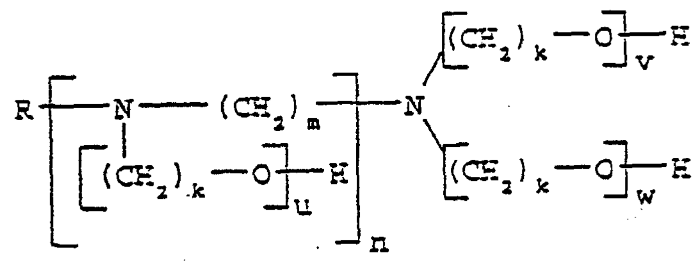

(V)

worin

R, m und n die vorstehend angegebene Bedeutung besitzen,
k eine ganze Zahl von 2 oder 3 ist,
u, v und w ganze Zahlen sind, deren Summe v+w+(nu) zusammen 2 bis 22 ergibt; und,

(ii) ihren Mischungen.

8. Verfahren zur Herstellung einer Zusammensetzung zum Schutz von Oberflächeninstallationen in Kontakt mit Wasser und zur Korrosion von Ablagerungen nach einem der Ansprüche 1, 6 und 7, dadurch gekennzeichnet, daß das Verfahren dadurch charakterisiert ist, daß man die folgenden Schritte durchführt:

(1) Verbessern des Zustandes der Flüssigkeit de AF-Verbindung durch Kochen,
(2) Aufeinanderfolgendes Einführen unter Rühren der Verbindung AF, in geschmolzenem Zustand in eine wässerigen Lösung der Verbindung PS, die vorher auf eine Temperatur gebracht wurde, die unterhalb der der geschmolzenen Zusammensetzung AF ist, und schließlich
(3) Einführen unter Rühren der Zusammensetzung AA in die so erhaltene Mischung.

9. Verfahren nach Anspruch 8, dadurch gekennzeichnet, daß es die folgenden Etappen umfaßt:

(1) Schmelzen der Zusammensetzung AF bei einer Temperatur zwischen ca. 30 ° und ca. 85 °C;
(2) Einführen unter Rühren der geschmolzenen Zusammensetzung AF in eine wässerige Lösung der Verbindung PS, die eine Temperatur besitzt die zwischen ca. 15 ° und ca. 60 °C liegt, und schließlich
(3) Einführen unter Rühren in die Mischung, die aus der Verbindung AA und, wenn vorhanden, der aminoxyalkylierten Dispersionsverbindung resultiert.

10. Verfahren nach einem der Ansprüche 8 und 9, dadurch gekennzeichnet, daß die Etappe (3) unterlassen wird, wenn die Zusammensetzung AA und die Zusammensetzung, die das vorhandene Dispersionsmittel darstellt, und die Dispersionszusammensetzung, die vorhanden ist, mit der Stufe (2) der Zusammensetzung (PS) vereinigt wird.

## Claims

1. Corrosion and scale inhibiting composition for protecting the metal surfaces of installations in contact with water, said composition, which contains a film-forming amine component (FA), an alkalizing amine component (AA) and a polysulfonic organic component (PS) whose molecule contains at least 2 units of the structure

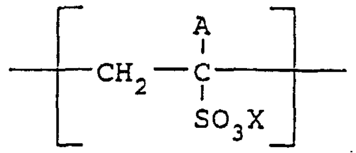

(Io)

in which A and X are defined below, being characterized in that it comprises:

(a) 1 part by weight of component FA,
(b) 1 to 100 parts by weight of component AA, and
(c) 1 to 100 parts by weight of component PS,

said component PS being a polymeric organic material selected from the group consisting of:

(1) the polymers of the structure

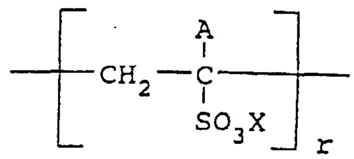

(I)

in which:

A is the hydrogen atom or a $C_1$-$C_4$-akyl group,
X is the hydrogen atom, a cation $Na^+$, $K^+$ or $NH_4^+$, or a $C_1$-$C_4$-akyl group, and
r is a number with a value such that the average molecular weight of said polymers is between 1000 and 2000;

(2) the copolymers of the structure

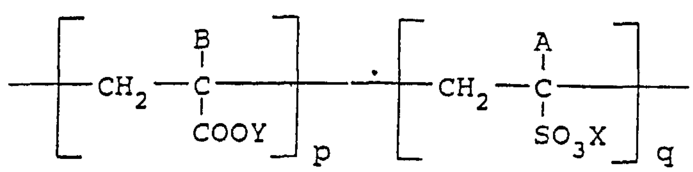

(II)

in which:

A and X are defined as indicated above,
B is the hydrogen atom or a $C_1$-$C_4$-akyl group,
Y is the hydrogen atom, a cation $Na^+$, $K^+$ or $NH_4^+$, or a $C_1$-$C_4$-akyl group, and
p and q are numbers such that the sum p + q has a value which gives said copolymers an average molecular weight of between 1500 and 5000;

(3) the terpolymers of the structure

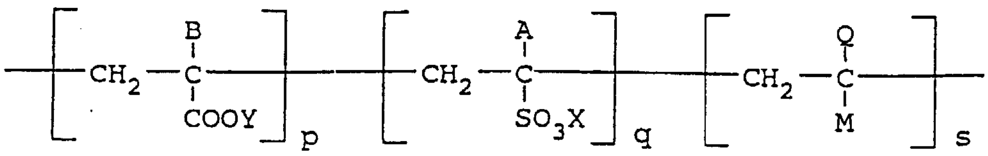 (III)

in which:

| | |
|---|---|
| A and X | are defined as indicated above, |
| B and Y | are defined as indicated above, |
| Q | is the hydrogen atom or a $C_1$-$C_4$-akyl group, |
| M | is OH, CN, $CONH_2$ or a $C_1$-$C_4$-alkoxy group, and |
| p, q and s | are numbers such that the sum p + q + s has a value which gives said terpolymers an average molecular weight of between 1800 and 6000; and |

(4) mixtures thereof.

**2.** Inhibitory composition according to claim 1, characterized in that A is H and X is H, $Na^+$, $K^+$ or $NH_4^+$.

**3.** Inhibitory composition according to claim 1, characterized in that B and Q are each H and Y is H, $Na^+$, $K^+$ or $NH_4^+$.

**4.** Inhibitory composition according to claim 1, characterized in that the film-forming amine component is a fatty amine selected from the group consisting of:

(i) the monoamines and polyamines of the formula

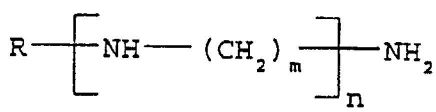 (IV)

in which:

| | |
|---|---|
| R | is a saturated or unsaturated $C_{12}$-$C_{22}$ aliphatic hydrocarbon radical, |
| m | is an integer with a value of between 2 and 8 inclusive, and |
| n | is an integer with a value of between 0 and 2 inclusive; and |

(ii) mixtures thereof.

**5.** Inhibitory composition according to claim 1, characterized in that the alkalizing amine component is an amine substance which is stable up to a temperature of at least 250°C and which is selected from the group consisting of

(i) ammonia, cyclohexylamine, morpholine and amino alcohols of the formula

HO-Z-NR'R" (VI)

in which Z is a $C_2$-$C_4$-alkylene group with a linear or branched hydrocarbon chain and R' and R", which can be identical or different, are each the hydrogen atom or a $C_1$-$C_3$-dkyl group, and (ii) mixtures thereof.

**6.** Inhibitory composition according to claim 1, characterized in that it also comprises:

(d) 0.01 to 1 part by weight of a dispersing component.

**7.** Inhibitory composition according to claim 6, characterized in that said dispersing component is selected from the

group consisting of:

(i) the oxyalkylenated amines ofthe formula

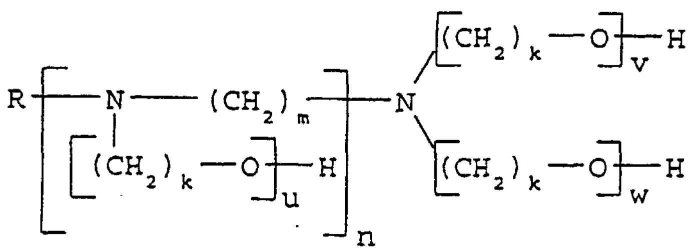

(V)

in which:

| | |
|---|---|
| R, m and n | are defined as indicated above, |
| k | is an integer with a value of 2 or 3, and |
| u, v and w | are integers such that the sum v + w (nu) is between 2 and 22; and |

(ii) mixtures thereof.

**8.** Method of preparing an inhibitory composition for protecting the surfaces of installations in contact with water from corrosion and scale, according to any one of claims 1, 6 and 7, said method being characterized in that it comprises the steps consisting in:

(1°) bringing the component FA to the liquid state by heating;
(2°) gradually introducing the molten component FA, with agitation, into an aqueous solution of the component PS which has first been brought to a temperature below that of said molten component FA; and then
(3°) introducing the component AA into the resulting mixture, with agitation.

**9.** Method according to claim 8, characterized in that it comprises the steps consisting in:

(1°) melting the component FA at a temperature between about 30 and about 85°C;
(2°) introducing the molten component FA, with agitation, into an aqueous solution of the component PS which is at a temperature between about 15 and about 60°C ; and then
(3°) introducing the component AA and, if present, the dispersing oxyalkylenated amine component into the resulting mixture, with agitation.

**10.** Method according to either one of claims 8 and 9 in which step (3°) is omitted when on the one hand the component AA and on the other hand the dispersing component, if present, are each associated with the component PS in step (2°).

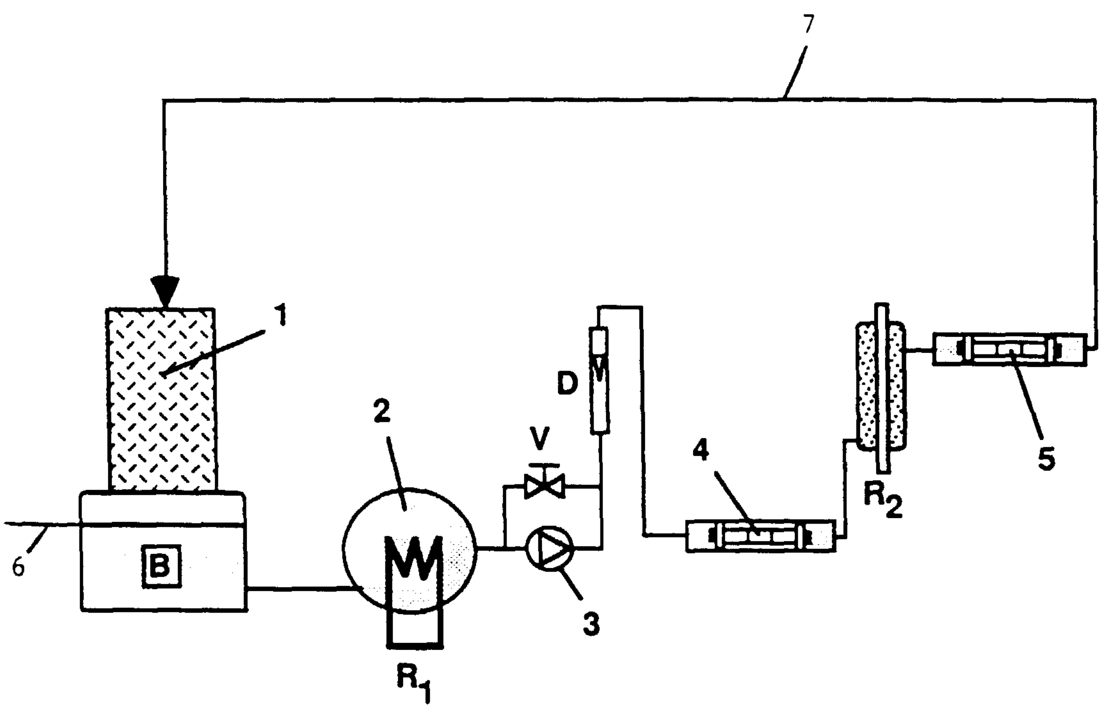


FIG. 1